# EUROPEAN PATENT APPLICATION

(11) **EP 4 645 888 A1**
(43) Date of publication of application: **05.11.2025**
(21) Application number: 24802516.5
(22) Date of filing: 11.01.2024
(51) Int. Cl.: H04N 23/50

(54) **CAMERA ARRANGEMENT AND TERMINAL DEVICE**

(30) Priority: 05.05.2023 CN 202310508069
(71) Applicant: Huawei Technologies Co., Ltd., Shenzhen, Guangdong 518129 (CN)
(72) Inventor: GUO, Chaofan, Shenzhen, Guangdong 518129 (CN)
(74) Representative: MERH-IP Matias Erny Reichl Hoffmann Patentanwälte PartG mbB
(86) International application number: PCT/CN2024/071722
(87) International publication number: WO 2024/230228

(57) **Abstract**

This application provides a camera assembly and a terminal device. The camera assembly includes a support frame, a camera module, and a driving structure. The driving structure and the camera module are disposed on the support frame, and the driving structure is configured to drive the camera module to move in a first direction. The driving structure includes a driving assembly, a guide assembly, and an elastic squeezing assembly. The driving assembly is connected to the support frame, and has an output end capable of moving in the first direction, and the output end is connected to the camera module. The guide assembly is connected to the support frame and the camera module, to guide the camera module to move relative to the support frame in the first direction. The elastic squeezing assembly includes two squeezing members, the squeezing members are connected to the support frame, the two squeezing members are disposed on two sides of the camera module and spaced apart from each other in a second direction, the squeezing members squeeze the camera module in the second direction, and the second direction is perpendicular to the first direction. The two squeezing members may restrict the camera module from deviating from the first direction when moving in the first direction, thereby reducing a tilt amount of the camera module tilting in the first direction.

## Description

This application claims priority to Chinese Patent Application No. 202310508069.4, filed with the China National Intellectual Property Administration on May 5, 2023 and entitled "CAMERA ASSEMBLY AND TERMINAL DEVICE", which is incorporated herein by reference in its entirety.

### TECHNICAL FIELD

This application relates to the field of sliding structure technologies, and in particular, to a camera assembly and a terminal device.

### BACKGROUND

A smart screen is a screen terminal that integrates more interaction modes such as audio, video, fitness, and education. A camera is disposed on the smart screen to obtain an environment image, so as to facilitate implementation of scenario interaction. As a requirement of the smart screen on image information becomes higher, a size of the camera becomes larger. If a large-sized camera is disposed on the smart screen, appearance of the smart screen is affected. Currently, a form of a lifting camera is usually used, so that the camera may be lifted to work or lowered to hide.

In the current smart screen, the camera usually tilts when the camera is lifted or lowered. The camera that tilts after being lifted affects the appearance of the smart screen, and obtained image information also tilts, which affects use of the smart screen.

### SUMMARY

This application provides a camera assembly and a terminal device, to resolve a problem that a camera tilts in a lifting process.

A first aspect of embodiments of this application provides a camera assembly. The camera assembly includes a support frame, a camera module, and a driving structure. The driving structure and the camera module are disposed on the support frame, and the driving structure is configured to drive the camera module to move in a first direction. The driving structure includes a driving assembly, a guide assembly, and an elastic squeezing assembly. The driving assembly is connected to the support frame, and has an output end capable of moving in the first direction, and the output end is connected to the camera module. The guide assembly is connected to the support frame and the camera module, to guide the camera module to move relative to the support frame in a first direction. The elastic squeezing assembly includes two squeezing members, the squeezing members are connected to the support frame, the two squeezing members are disposed on two sides of the camera module and spaced apart from each other in a second direction, the squeezing members squeeze the camera module in the second direction, and the second direction is perpendicular to the first direction.

In this camera assembly, the support frame restricts relative positions of the driving structure and the camera module, and restricts a movement path of the camera module to the first direction by using the guide assembly, so that the driving structure can drive the camera module to move in the first direction when operating. The two squeezing members of the elastic squeezing assembly squeeze the camera module in the second direction, and the camera module moves under squeezing force, so that the camera module can be restricted from deviating from the first direction when moving in the first direction. The two squeezing members may also reduce a tilt amount of the camera module tilting in the first direction.

Based on the first aspect, in a possible implementation, the squeezing member may be in rolling contact with the camera module.

In this possible implementation, when the camera module moves in the first direction, there is rolling friction between the squeezing member and the camera module, and therefore friction between the squeezing member and the camera module can be reduced.

Based on the first aspect, in a possible implementation, the squeezing member includes a rotating shaft and a flexible ring. The flexible ring is sleeved on the rotating shaft. The rotating shaft is connected to the support frame, so that the flexible ring is rotatably connected to the support frame. A periphery of the flexible ring may be in rolling contact with the camera module.

In this possible implementation, the squeezing member fits with the flexible ring by using the rotating shaft, and the flexible ring deforms to squeeze the camera module, so that a difference of tolerance that is of each component of the camera assembly and that is generated during production and assembly can be absorbed, and in a process in which the camera assembly moves in the first direction, the squeezing member more stably presses against a surface of the camera module to squeeze the camera module. The elastic deformation of the flexible ring may further form elastic pressure applied to the camera module.

Based on the first aspect, in a possible implementation, the elastic squeezing assembly further includes an elastic member. One end of the elastic member acts on the support frame, and the other end acts on the squeezing member, so that the squeezing member has a tendency to elastically approach the camera module.

In this possible implementation, two ends of the elastic member respectively act on the support frame and the squeezing member, so that the squeezing member can elastically move relative to the support frame. The squeezing member elastically moves relative to the support frame, so that tolerance of production and assembly of each component of the camera assembly can be reduced. In this way, in a process in which the camera assembly moves in the first direction, the squeezing member more stably presses against a surface of the camera module to squeeze the camera module. The elastic deformation of the elastic member may further form elastic pressure applied to the camera module.

Based on the first aspect, in a possible implementation, the guide assembly includes a first sliding member and a second sliding member. The first sliding member is disposed on the support frame, and the second sliding member is disposed on the camera module. The first sliding member and the second sliding member slidably fit with each other in the first direction.

In this possible implementation, slidable fitting between the first sliding member and the second sliding member can guide the camera module to move relative to the support frame in the first direction. The first sliding member and the second sliding member guide a movement of the camera module, and the squeezing member directly acts on the camera module to correct a tilt amount of the camera module tilting in the first direction. The first sliding member and the second sliding member work together to improve stability of a movement of the camera module in the first direction, and maintain a posture of the camera module in the first direction.

Based on the first aspect, in a possible implementation, the two first sliding members are spaced apart from each other in the second direction, and the two second sliding members are spaced apart from each other in the second direction.

In this possible implementation, the two first sliding members fit with the corresponding second sliding members, to improve a guide effect of the guide assembly. However, based on the elastic squeezing assembly, the two sides of the camera module are squeezed in the second direction, the tilt amount of the camera module tilting in the first direction is reduced, and a problem of getting stuck during sliding caused by fitting between the two first sliding members and corresponding second sliding members can be alleviated.

Based on the first aspect, in a possible implementation, the camera module includes a camera body and two connection blocks. The two connection blocks are spaced apart from each other in the second direction. One end of each connection block is connected to the camera body, and the other end is connected to the output end. Each second sliding member is disposed on a corresponding connection block.

In this possible implementation, the camera body fits with the driving structure by using the connection block, and also implements guide with the support frame by using the connection block. A case in which the camera body or the support frame cannot be assembled due to production tolerance is avoided, and costs of the camera assembly are reduced. In addition, maintenance costs can be reduced, and two areas for filling tolerance are separately formed between the camera body and the connection block and between the connection block and the support frame, so that tolerance is filled in an assembly process to implement stable assembly.

Based on the first aspect, in a possible implementation, the camera module further includes a floating connector. The floating connector has a first connection end and a second connection end. The first connection end is connected to the camera body, and the second connection end is connected to the connection block. The first connection end elastically fits with the camera body, or the second connection end elastically fits with the connection block, so that the camera body can adjustably fit with the connection block in the second direction.

In this possible implementation, when the camera module and the connection block are assembled, the floating connector enables the camera module and the connection block to be assembled to adjust relative positions in the second direction, so that the first sliding member and the second sliding member are connected to each other.

Based on the first aspect, in a possible implementation, the floating connector includes a connection rod and an elastic washer. The camera body is provided with a first hole, and the connection block is provided with a second hole. The connection rod passes through the first hole and the second hole, and an adjustment gap is formed between the connection rod and an inner wall of the first hole or an inner wall of the second hole. The elastic washer is sleeved on the connection rod, and is located in the adjustment gap, to form the first connection end or the second connection end.

In this possible implementation, a position of the connection rod in the first hole or the second hole is adjusted, so as to adjust relative positions of the connection block and the camera body in the second direction. The elastic washer is located in the adjustment gap, so as to stabilize the position of the connection rod in the first hole or the second hole. Specifically, when the adjustment gap is formed between the connection rod and the inner wall of the first hole, a position of the connection rod in the first hole may be adjusted, and relative positions of the connection rod and the camera body may be adjusted, so as to adjust relative positions of the camera body and the connection block in the second direction. The elastic washer is disposed in the first hole and clamped between the connection rod and the inner wall of the first hole, so as to stabilize the position of the connection rod in the first hole. When the adjustment gap is formed between the connection rod and the inner wall of the second hole, a position of the connection rod in the second hole may be adjusted, and relative positions of the connection rod and the connection block may be adjusted, so as to adjust relative positions of the camera body and the connection block in the second direction. The elastic washer is disposed in the second hole and clamped between the connection rod and the inner wall of the second hole, so as to stabilize the position of the connection rod in the second hole.

Based on the first aspect, in a possible implementation, one of the first sliding member and the second sliding member is a sliding groove extending in the first direction, and the other is a sliding bar extending in the first direction.

In this possible implementation, the sliding bar extends long in the first direction, and slidable fitting between the sliding bar and the sliding groove can reduce a tilt amount of the camera module tilting in the first direction.

Based on the first aspect, in a possible implementation, the driving assembly includes a driving member and a connection base, and the connection base extends in the second direction. The driving member is fixedly disposed on the support frame, and the connection base is connected to the driving member to form the output end. The camera module is connected to two ends of the connection base in the second direction.

In this possible implementation, the connection base is connected to the camera module, so that the camera module and the driving assembly have at least two connection points that are spaced apart from each other in the second direction. Compared with a form in which the camera module and the driving assembly have only one connection point, the driving assembly can drive the camera module to move in the first direction more stably.

Based on the first aspect, in a possible implementation, the driving assembly further includes a first guide member and a second guide member. The first guide member is disposed on the support frame, and the second guide member is disposed on the connection base. The first guide member and the second guide member slidably fit with each other in the first direction.

In this possible implementation, the first guide member and the second guide member may guide a movement of the connection base relative to the support frame, so as to reduce a movement amount of the connection base tilting in the first direction when the connection base moves relative to the support frame. The camera assembly is driven by the connection base to move relative to the support frame. After the movement amount of the connection base tilting in the first direction when the connection base moves relative to the support frame is reduced, the tilt amount of the camera module tilting in the first direction can also be reduced.

Based on the first aspect, in a possible implementation, the connection base has two first connection positions that are spaced apart from each other in the second direction, and the camera module has two second connection positions that are spaced apart from each other in the second direction. Each first connection position is connected to a corresponding second connection position, so as to connect the connection base and the camera module.

In this possible implementation, the two first connection positions are connected to the corresponding second connection positions, so as to reduce a tilt amount of the connection base tilting in the first direction around either of the first connection positions.

Based on the first aspect, in a possible implementation, the driving member includes a motor and a lead screw. The lead screw extends in the first direction, and the motor is connected to the lead screw to drive the lead screw to rotate. The lead screw threadedly fits with the connection base.

In this possible implementation, the motor, the lead screw, and the connection base fit with one another to implement conversion from a rotation movement to a linear movement. In addition, the lead screw threadedly fits with the connection base to implement quantitative control of a movement distance of the connection base in the first direction. The movement distance of the connection base in the first direction may be controlled by controlling a quantity of output rotations of the motor.

A second aspect of embodiments of this application provides a terminal device. The terminal device includes a terminal body and the camera assembly according to any implementation of the first aspect. The camera assembly is disposed on the terminal body.

The terminal device may obtain image information by using the camera assembly. In this camera assembly, a support frame restricts relative positions of a driving structure and a camera module, and restricts a movement path of the camera module to a first direction by using a guide assembly, so that a driving structure can drive the camera module to move in the first direction when operating. Two squeezing members of an elastic squeezing assembly squeeze the camera module in a second direction, and the camera module moves under squeezing force, so that the camera module can be restricted from deviating from the first direction when moving in the first direction.

Based on the second aspect, in a possible implementation, the terminal body includes a display panel. The display panel has a display surface and a mounting surface that are opposite to each other. The display surface is used to display image information. The support frame of the camera assembly is disposed on the mounting surface.

In this possible implementation, a pixel module may be disposed on the display surface of the display panel to display the image information, and the display panel further provides a mounting base of the camera assembly, to reduce space occupied by the camera assembly in the terminal device.

### BRIEF DESCRIPTION OF DRAWINGS

FIG. 1 is a diagram of a structure of a terminal device according to an implementation of this application, where a camera assembly extends out of a terminal body;
FIG. 2 is a diagram of a structure of a terminal device according to an implementation of this application, where a camera assembly is accommodated in a terminal body;
FIG. 3 is a diagram of an internal structure of a terminal device according to an implementation of this application;
FIG. 4 is a diagram of a structure of a camera assembly according to a first implementation of this application, where a camera body retracts into a support frame;
FIG. 5 is a diagram of a structure of the camera assembly according to the first implementation of this application, where the camera body partially extends out of the support frame;
FIG. 6 is a diagram of a structure of the camera assembly according to the first implementation of this application, where the camera body extends out of the support frame;
FIG. 7 is an assembly diagram of the camera assembly according to the first implementation of this application;
FIG. 8 is a sectional view of the camera assembly according to the first implementation of this application;
FIG. 9 is an assembly diagram of a camera assembly according to a second implementation of this application;
FIG. 10 is a sectional view of the camera assembly according to the second implementation of this application;
FIG. 11 is a sectional view of an elastic squeezing assembly of the camera assembly according to the first implementation of this application;
FIG. 12 is a diagram of a structure of a first field of view of a camera assembly according to a third implementation of this application;
FIG. 13 is a diagram of a structure of a second field of view of the camera assembly according to the third implementation of this application;
FIG. 14 is a sectional view of an elastic squeezing assembly of the camera assembly according to the third implementation of this application; and
FIG. 15 is an assembly diagram of the elastic squeezing assembly of the camera assembly according to the third implementation of this application.

### Description of reference signs of main components:

| | |
|---|---|
| Terminal device | 001 |
| Terminal body | 010 |
| Display panel | 011 |
| Display surface | 0111 |
| Mounting surface | 0113 |
| First function module | 013 |
| Second function module | 015 |
| Camera assembly | 030 |
| Camera module | 100 |
| Second connection position | 1001 |
| Pin column | 1003 |
| Camera body | 110 |
| First hole | 111 |
| Pre-fastening hole | 113 |
| Connection block | 130 |
| Second hole | 131 |
| Pre-positioning column | 133 |
| Floating connector | 150 |
| Connection rod | 151 |
| Rod part | 1511 |
| Head part | 1513 |
| Elastic washer | 153 |
| Driving structure | 200 |
| Driving assembly | 210 |
| Motor | 211 |
| Lead screw | 212 |
| Connection base | 213 |
| First connection position | 2131 |
| First guide member | 215 |
| Guide column | 2151 |
| Second guide member | 217 |
| Guide hole | 2171 |
| Guide assembly | 230 |
| First sliding member | 231 |
| Sliding groove | 2311 |
| Second sliding member | 233 |
| Sliding bar | 2331 |
| Elastic squeezing assembly | 250 |
| Squeezing member | 251 |
| Rotating shaft | 2511 |
| Flexible ring | 2513 |
| Movable base | 2515 |
| First segment | 25151 |
| Second segment | 25153 |
| Mounting rod | 2517 |
| Rigid ring | 2519 |
| Elastic member | 253 |
| Support frame | 300 |
| Movable cavity | 3001 |
| Mounting channel | 3003 |
| Mounting screw | 301 |
| Base | 310 |
| End cover | 330 |
| Through hole | 331 |
| Expansion base | 350 |
| First protrusion member | 351 |
| Second protrusion member | 353 |
| Mounting protrusion column | 370 |
| Mounting hole | 371 |
| Control board | 400 |
| First direction | X |
| Second direction | Y |
| Third direction | Z |

In the following specific implementations, this application is further described with reference to the accompanying drawings.

### DESCRIPTION OF EMBODIMENTS

The following describes implementations of this application by using specific embodiments. A person skilled in the art may easily learn of other advantages and effects of this application based on content disclosed in this specification. Although this application is described with reference to example embodiments, this does not mean that features of this application are limited only to the implementations. On the contrary, the purpose of describing this application with reference to implementations is to cover other options or modifications that may be extended based on the claims of this application. To provide a deep understanding of this application, many specific details are included in the following description. This application may also be practiced without these details. In addition, to avoid confusing or obscuring key points of this application, some specific details are omitted in the description. It should be noted that embodiments of this application and features in the embodiments may be combined with each other provided that no conflict occurs.

The following terms "first", "second", and the like are merely used for description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise specified, "a plurality of" means two or more. Orientation terms such as "up", "down", "left", and "right" are defined relative to an orientation of schematic placement of components in the accompanying drawings. It should be understood that these directional terms are relative concepts and are used for relative description and clarification. These directional terms may vary accordingly depending on an orientation in which the components are placed in the accompanying drawings.

In this application, unless otherwise explicitly specified and limited, a term "connection" should be understood in a broad sense. For example, the "connection" may be a fixed connection, a detachable connection, or an integrated connection; and may be a direct connection or an indirect connection by using an intermediate medium. The term "and/or" used in this specification includes any and all combinations of one or more related listed items.

When the following embodiments are described in detail with reference to diagrams, for ease of description, a diagram indicating a partial structure of a component is partially enlarged not based on a general scale. In addition, the diagrams are merely examples, and should not limit the protection scope of this application herein.

To make the objectives, technical solutions, and advantages of this application clearer, the following further describes the implementations of this application in detail with reference to the accompanying drawings.

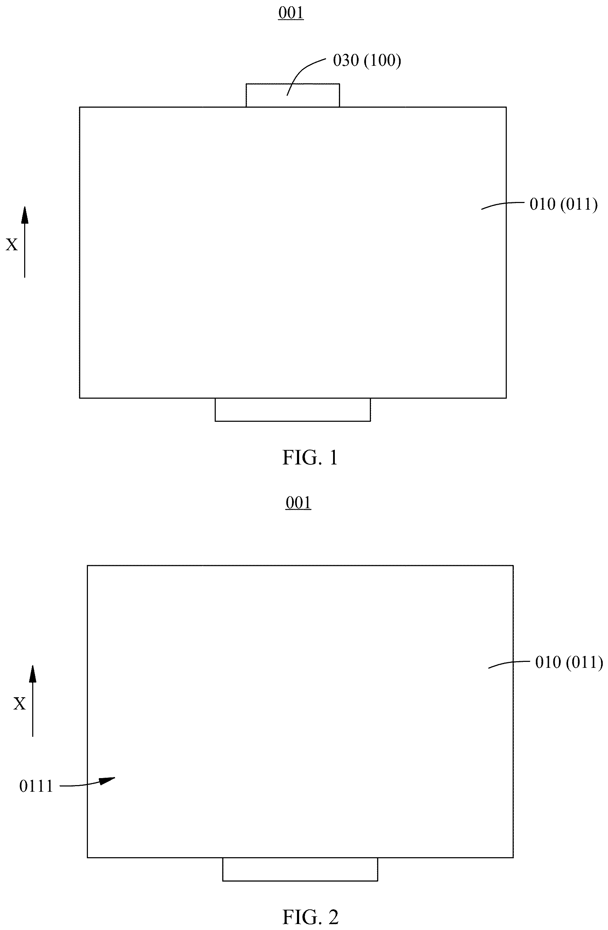

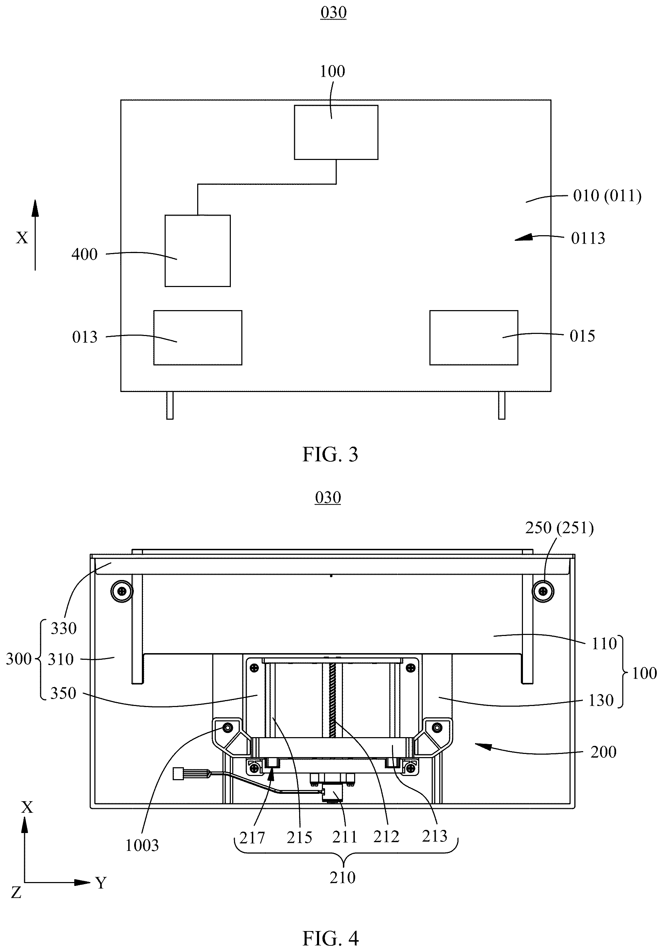

FIG. 1 is a diagram of a structure of a terminal device 001 according to an implementation of this application, where a camera assembly 030 extends out of a terminal body 010. FIG. 2 is a diagram of a structure of a terminal device 001 according to an implementation of this application, where a camera assembly 030 is accommodated in a terminal body 010. FIG. 3 is a diagram of an internal structure of a terminal device 001 according to an implementation of this application.

Refer to FIG. 1 and FIG. 2. The terminal device 001 includes the terminal body 010 and the camera assembly 030. The camera assembly 030 includes a camera module 100. The camera assembly 030 is movably connected to the terminal body 010, so that the camera module 100 in the camera assembly 030 can extend out of the terminal body 010 in a first direction X, to obtain an environmental image outside the terminal body 010. The camera module 100 can retract into the terminal body 010 in the first direction X, and the camera module 100 is accommodated in the terminal body 010 to protect the camera module 100. In addition, an overall outline of the terminal body 010 is kept flat, thereby improving appearance consistency of the terminal body 010.

Refer to FIG. 2 and FIG. 3. Optionally, the terminal device 001 may be a device such as a liquid crystal television or a display, and the camera assembly 030 is used to meet requirements of a user in a plurality of extended feature scenarios such as a video, live broadcast, and fitness. In the terminal device 001, the terminal body 010 includes a display panel 011. The display panel 011 has a display surface 0111 and a mounting surface 0113 that are opposite to each other.

The display surface 0111 is configured to display image information. A pixel module, such as a plurality of light emitting diodes, may be disposed on the display surface 0111. The image information is displayed on the display surface 0111 by using the pixel module. The display panel 011 has a control circuit, and the control circuit may control each light emitting diode in the pixel module to turn on/off, so as to control conversion of the image information. The camera assembly 030 is disposed on the mounting surface 0113. Optionally, the camera assembly 030 further includes a support frame 300, the camera module 100 is movably connected to the support frame 300, and the support frame 300 is fixedly connected to the display panel 011. When the camera module 100 moves relative to the support frame 300, the camera module 100 also moves relative to the display panel 011, so that the camera module 100 can extend out of or retract into the terminal body 010.

Optionally, the camera assembly 030 further includes a control board 400. The control board 400 is electrically connected to the camera assembly 030, and may be configured to control a movement of the camera module 100 relative to the support frame 300 and/or configured to receive image information obtained by the camera module 100.

Optionally, the terminal body 010 further includes a first function module 013 and a second function module 015. The first function module 013 may be a power supply, and the power supply provides electric energy for the terminal device 001. The second function module 015 may be a loudspeaker, and the loudspeaker enables the terminal device 001 to make a sound, so as to interact with a user.

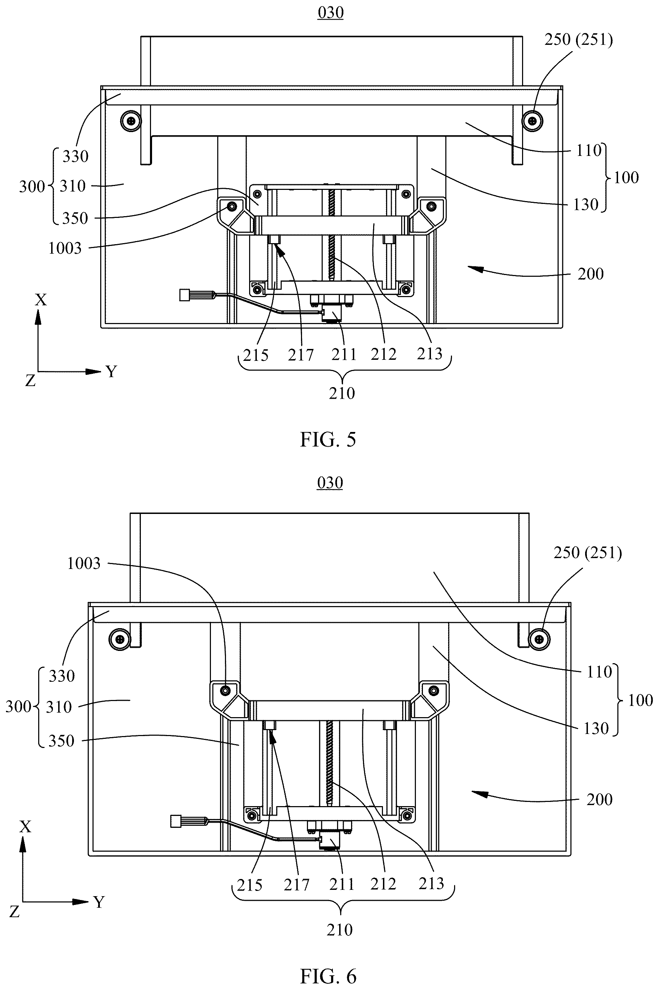

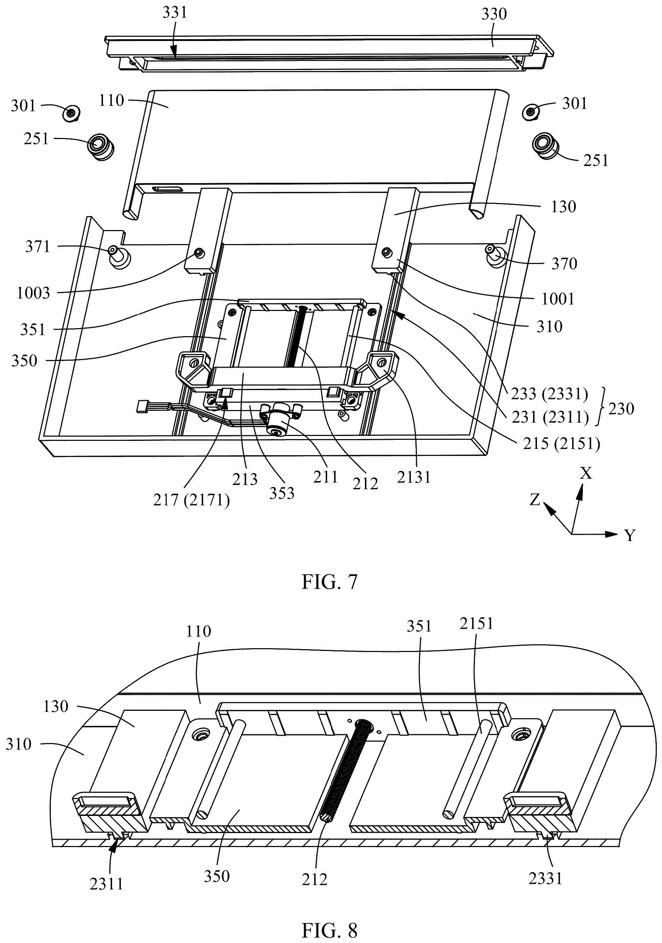

FIG. 4 is a diagram of a structure of a camera assembly 030 according to a first implementation of this application, where a camera body 110 retracts into a support frame 300. FIG. 5 is a diagram of a structure of the camera assembly 030 according to the first implementation of this application, where the camera body 110 partially extends out of the support frame 300. FIG. 6 is a diagram of a structure of the camera assembly 030 according to the first implementation of this application, where the camera body 110 extends out of the support frame 300. FIG. 7 is an assembly diagram of the camera assembly 030 according to the first implementation of this application.

Refer to FIG. 4, FIG. 5, and FIG. 6. The camera assembly 030 further includes a driving structure 200. Both the driving structure 200 and the camera module 100 are disposed on the support frame 300, and the driving structure 200 may drive the camera module 100 to move in a first direction X. The support frame 300 is disposed on the terminal body 010, and the driving structure 200 drives the camera module 100 to move in the first direction X, so that the camera module 100 can extend out of or retract into the terminal body 010 in the first direction X. The support frame 300 includes a base 310 and an end cover 330. The base 310 is detachably connected to the end cover 330. Both the driving structure 200 and the camera module 100 are disposed on the base 310, and the end cover 330 has a through hole 331. When the camera module 100 moves in the first direction X, the camera module 100 can extend out of the end cover 330 from the through hole 331.

Refer to FIG. 4 and FIG. 7. The driving structure 200 includes a driving assembly 210. The driving assembly 210 is connected to the support frame 300, the driving assembly 210 has an output end, and the output end can move in the first direction X relative to the support frame 300. The camera module 100 is connected to the output end. When the output end moves in the first direction X, the output end drives the camera module 100 to move in the first direction X.

The driving structure 200 further includes a guide assembly 230. The guide assembly 230 is connected to the support frame 300 and the camera module 100. The guide assembly 230 extends in the first direction X. When the output end drives the camera module 100 to move, the guide assembly 230 may guide the camera module 100 to move relative to the support frame 300. The guide assembly 230 makes it difficult for the camera module 100 to tilt in the first direction X when the camera module 100 moves relative to the support frame 300.

The driving structure 200 further includes an elastic squeezing assembly 250. The elastic squeezing assembly 250 includes two squeezing members 251. The two squeezing members 251 clamp the driving structure 200 in a second direction Y. The second direction Y is perpendicular to the first direction X, and a plane formed by the first direction X and the second direction Y is approximately parallel to the mounting surface 0113 of the display panel 011. The two squeezing members 251 squeeze the camera module 100 in the second direction Y. Under the squeezing of the two squeezing members 251, a tilt tendency of the camera module 100 to deviate from the first direction X is restricted, so that a tilt amount of the camera module 100 tilting in the first direction X can be reduced, and a tilt amount of the movement direction of the camera module 100 relative to the first direction X is also reduced.

A tilt amount of the camera module 100 tilting in the first direction X is reduced, so that the camera module 100 can obtain image information in a posture closer to a specified posture of the camera module 100 during working, thereby reducing the tilt amount of the image information. For example, when photographing a person, a camera that does not tilt to the first direction X is in a specified posture. In this case, when the camera module 100 in the specified posture obtains image information of a person standing in an upright posture, the person should present a vertical standing state in the rectangular image information, and in the rectangular image information, a head-to-foot connection line of the person should be parallel to a side edge. The camera that tilts to the first direction X is not in the specified posture. In this case, when the camera module 100 not in the specified posture obtains image information of a person standing in an upright posture, the person no longer presents a vertical standing state in the rectangular image information, and in the rectangular image information, a head-to-foot connection line of the person tilts to a side edge.

Optionally, the driving assembly 210 includes a motor 211 and a lead screw 212. The motor 211 is fixedly connected to the support frame 300. A rotor of the motor 211 is connected to the lead screw 212, so that the motor 211 can drive the lead screw 212 to rotate around an axis of the lead screw 212. The driving assembly 210 further includes a connection base 213, and the lead screw 212 threadedly fits with the connection base 213. The connection base 213 fits with the support frame 300 around the lead screw 212 circumferentially in a limited manner. When the lead screw 212 rotates around an axis of the lead screw 212, the connection base 213 does not rotate with the lead screw 212, so that the lead screw 212 drives the connection base 213 to move in an extension direction of the lead screw 212. The lead screw 212 extends in the first direction X. When the motor 211 drives the lead screw 212 to rotate, the connection base 213 moves in the first direction X relative to the support frame 300.

The driving assembly 210 further includes a first guide member 215 and a second guide member 217. The first guide member 215 and the second guide member 217 are configured to guide a movement of the connection base 213 relative to the support frame 300, to reduce a tilt amount of the connection base 213 tilting in the first direction X when the connection base 213 moves relative to the support frame 300. The first guide member 215 includes a guide column 2151 disposed on the support frame 300. The second guide member 217 includes a guide hole 2171 disposed on the connection base 213. The guide column 2151 extends in the first direction X, the guide column 2151 passes through the guide hole 2171, and a periphery of the guide column 2151 is in contact with an inner wall of the guide hole 2171. The guide column 2151 and the guide hole 2171 fit with each other to guide the connection base 213 to move in the first direction X relative to the support frame 300. Specifically, the support frame 300 further includes an expansion base 350. The expansion base 350 is fastened on a surface of the base 310. The expansion base 350 includes a first protrusion member 351 and a second protrusion member 353 that are spaced apart from each other in the first direction X. One end of the guide column 2151 is connected to the first protrusion member 351, and the other end of the guide column 2151 is connected to the second protrusion member 353, so that none of a periphery of the guide column 2151 is in contact with a surface of the support frame 300, and the guide column 2151 passes through the guide hole 2171 of the connection base 213. The lead screw 212 is rotatably connected to the first protrusion member 351 and the second protrusion member 353, and relative positions of the lead screw 212 and the support frame 300 may also be restricted by using the first protrusion member 351 and the second protrusion member 353.

Optionally, the two guide columns 2151 are spaced apart from each other in the second direction Y, and the lead screw 212 is located between the two guide columns 2151. In the second direction Y, two guide holes 2171 are spaced apart from each other of the connection base 213. Each guide column 2151 passes through a corresponding guide hole 2171. Through fitting between the two guide columns 2151 and the connection base 213, the tilt amount of the connection base 213 tilting in the first direction X can be reduced.

It may be understood that the first guide member 215 and the second guide member 217 may also be in another form. For example, the first guide member 215 is a guide protrusion, and the second guide member 217 is a guide groove. The guide protrusion protrudes from the surface of the support frame 300 to the connection base 213, and the guide protrusion extends in the first direction X. The guide groove is disposed on the connection base 213, the guide protrusion is accommodated in the guide groove, and an outer surface of the guide protrusion is in contact with an inner surface of the guide groove. The guide protrusion and the guide groove may also be used together to guide the movement of the connection base 213 relative to the support frame 300.

The connection base 213 has two first connection positions 2131 that are spaced apart from each other in the second direction Y. The camera module 100 has two second connection positions 1001 that are spaced apart from the second direction Y. Each first connection position 2131 is connected to a corresponding second connection position 1001, so that the connection base 213 is connected to the camera module 100. Compared with a form in which only one position of the connection base 213 is connected to the camera module 100, the connection between the connection base 213 and the camera module 100 is more stable through fitting between two first connection positions 2131 and corresponding second connection positions 1001, so that the camera module 100 does not easily tilt in the first direction X relative to the connection base 213.

Optionally, the first connection position 2131 is connected to the second connection position through a pin column 1003. A round hole is disposed in the first connection position 2131, the pin column 1003 is fixedly disposed in the second connection position 1001, and the pin column 1003 passes through the round hole to connect the first connection position 2131 and the second connection position 1001, so as to connect the camera module 100 and the connection base 213. The pin column 1003 is connected to the camera module 100 and the connection base 213, which facilitates assembling and disassembling. In addition, there is a rotation surplus between the camera module 100 and the connection base 213, so as to restrict the tilt amount of the connection base 213 tilting in the first direction X from being transferred to the camera assembly 030.

FIG. 8 is a sectional view of the camera assembly 030 according to the first implementation of this application.

Refer to FIG. 7 and FIG. 8. A camera module 100 includes a camera body 110 and two connection blocks 130. Two second connection positions 1001 of the camera module 100 are disposed on corresponding connection blocks 130. The camera body 110 is fixedly disposed with the two connection blocks 130, and when the two connection blocks 130 move, the camera body 110 is driven to move synchronously. Optionally, a housing of the camera body 110 and the two connection blocks 130 are integrally formed. A mounting area for mounting a driving assembly 210 is formed between the two connection blocks 130. The mounting area enables the camera module 100 to avoid the driving assembly 210 during movement, so as to avoid collision between the camera module 100 and the driving assembly 210 in a process of moving in a first direction X.

The guide assembly 230 includes a first sliding member 231 and a second sliding member 233. The first sliding member 231 is disposed on the support frame 300, and the second sliding member 233 is disposed on the camera module 100. The first sliding member 231 slidably fits with the second sliding member 233, to guide the camera module 100 to move in the first direction X relative to the support frame 300.

Optionally, the first sliding member 231 is a sliding groove 2311, and the second sliding member 233 is a sliding bar 2331. The sliding groove 2311 extends in the first direction X, and the sliding bar 2331 also extends in the first direction X. The sliding bar 2331 is slidably accommodated in the sliding groove 2311, to guide the camera module 100 to move in the first direction X relative to the support frame 300. Specifically, the support frame 300 has an extension wall, and the sliding groove 2311 is formed between two adjacent extension walls. The sliding bar 2331 is disposed on a surface that is of the connection block 130 and that faces the support frame 300. In a second direction Y, a size of the sliding groove 2311 may be greater than a size of the sliding bar 2331, so that the sliding bar 2331 can be easily inserted into the sliding groove 2311. In addition, there is a gap surplus between the sliding bar 2331 and the sliding groove 2311, which can reduce friction force when the sliding bar 2331 slides in the sliding groove 2311.

Optionally, one second sliding member 233 is disposed on each connection block 130, so that the two second sliding members 233 are spaced apart from each other in the second direction Y. Correspondingly, the support frame 300 is also provided with two first sliding members 231 that are spaced apart from each other in the second direction Y. Each first sliding member 231 slidably fits with a corresponding second sliding member 233. The two first sliding members 231 fit with corresponding second sliding member 233, so as to improve a guide effect of the guide assembly 230.

Optionally, on a cross section perpendicular to the first direction X, a cross section of the sliding bar 2331 may be a rectangle, but is not limited to a rectangle. For example, the cross section of the sliding bar 2331 may be in a plurality of shapes such as a trapezoid and a triangle. When the cross section of the sliding bar 2331 is a trapezoid, a narrow side thereof faces the support frame 300, and a wide side thereof is away from the support frame 300, if the cross section of the sliding groove 2311 is a trapezoid corresponding to the sliding bar 2331, the fitting between the sliding groove 2311 and the sliding bar 2331 has a center alignment effect. When the camera module 100 is driven to approach the support frame 300 in a third direction Z, the two sides of the sliding bar 2331 are in contact with side walls of the sliding groove 2311, so that the sliding bar 2331 can be aligned with a middle position of the sliding groove 2311. The third direction Z is perpendicular to the first direction X and the second direction Y.

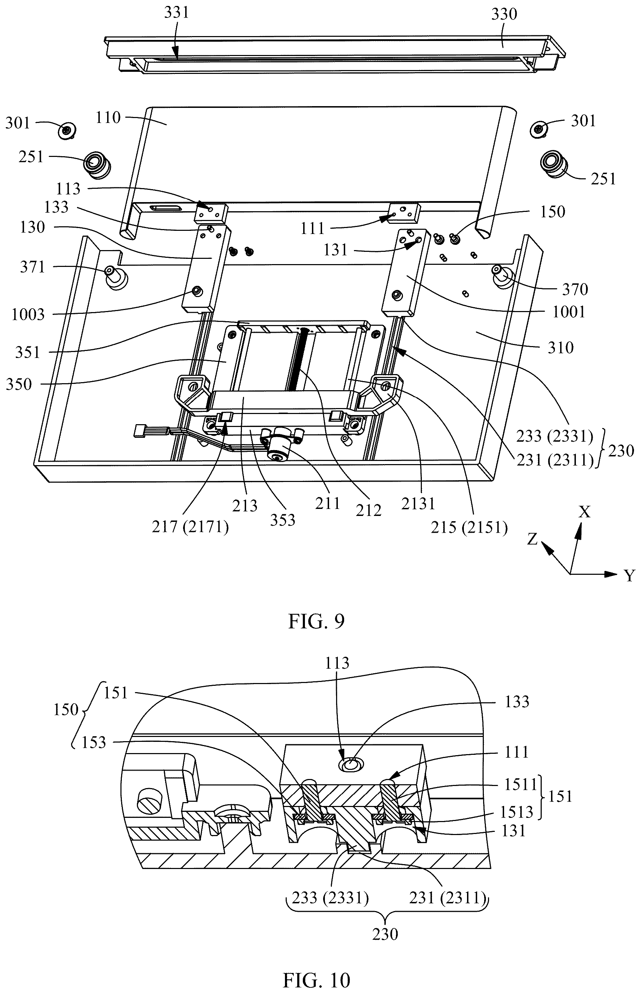

FIG. 9 is an assembly diagram of a camera assembly 030 according to a second implementation of this application. FIG. 10 is a sectional view of the camera assembly 030 according to the second implementation of this application.

Refer to FIG. 9 and FIG. 10. A camera module 100 includes a camera body 110 and two connection blocks 130. Two second connection positions 1001 of the camera module 100 are disposed on corresponding connection blocks 130. The camera module 100 further includes a floating connector 150. The camera body 110 is connected to the connection block 130 by using the floating connector 150. Relative positions of the camera body 110 and the connection block 130 in a second direction Y may be adjusted by using the floating connector 150.

Optionally, the floating connector 150 includes a connection rod 151 and an elastic washer 153. The camera body 110 is provided with a first hole 111. The connection block 130 is provided with a second hole 131. The connection rod 151 passes through the second hole 131 and threadedly fits with the first hole 111. The connection rod 151 may restrict relative positions of the connection block 130 and the camera body 110 in a first direction X and the second direction Y. On a cross section perpendicular to a third direction Z, a cross-sectional area of the second hole 131 is greater than a cross-sectional area of the connection rod 151, and an adjustment gap is formed between the connection rod 151 and an inner wall of the second hole 131. The elastic washer 153 is sleeved on the connection rod, an outer side of the elastic washer 153 acts on the inner wall of the second hole 131, and the adjustment gap is filled by using the elastic washer 153. When the connection rod 151 threadedly fits with the first hole 111, relative positions of the connection rod 151 and the camera body 110 in the second direction Y are fixed. The connection block 130 may move in the second direction Y relative to the connection rod 151, to adjust relative positions of the connection rod 151 and the camera body 110 relative to the connection block 130. In this case, the elastic washer 153 is elastically deformed to match a change of the adjustment gap.

Optionally, the connection rod 151 includes a rod part 1511 and a head part 1513. The head part 1513 is fixedly disposed at one end of the rod part 1511. The second hole 131 is a stepped hole. The rod part 1511 of the connection rod 151 is threadedly connected to the first hole 111, to form a first connection end. The elastic washer 153 is sleeved on the rod part 1511. In the third direction Z, the elastic washer 153 is clamped by the bottom wall of the second hole 131 and the head part 1513 of the connection rod 151, and the elastic washer 153 forms the second connection end. The second connection end formed by the elastic washer 153 elastically fits with the connection block 130, so that the camera body 110 can be adjustably fit with the connection block 130 in the second direction Y. Squeezing force of a bottom wall of the second hole 131 and the head part 1513 of the connection rod 151 on the elastic washer 153 is increased, so that the elastic washer 153 is squeezed and deformed, to strengthen rigidity of the elastic washer 153 between the rod part 1511 and the inner wall of the second hole 131. When the connection block 130 and the camera body 110 need to be assembled, the elastic washer 153 is first sleeved on the connection rod 151, so that the connection rod 151 passes through the second hole 131 and threadedly fits with the first hole 111, but the bottom wall of the second hole 131 and the head part 1513 of the connection rod 151 do not squeeze the elastic washer 153. Relative positions of the connection block 130 and the camera module 100 in the second direction Y are adjusted. After the relative positions of the connection block 130 and the camera in the second direction Y are determined, the connection rod 151 is rotated again, so that the connection rod 151 further extends into the first hole 111, and squeezing force of the bottom wall of the second hole 131 and the head part 1513 of the connection rod 151 on the elastic washer 153 is increased.

It may be understood that, on a cross section perpendicular to the third direction Z, a cross-sectional area of the first hole 111 may also be set to be greater than a cross-sectional area of the connection rod 151, and an adjustment gap is formed between the connection rod 151 and the inner wall of the first hole 111. A flexible sleeve is disposed on the connection rod, an outer side of the elastic washer 153 acts on the inner wall of the first hole 111, and the adjustment gap is filled by using the elastic washer 153.

Optionally, two second holes 131 are disposed on each connection block 130. Correspondingly, four first holes 111 are disposed on the camera body 110, where two first holes 111 fit with two second holes 131 of one connection block 130, and the other two first holes 111 fit with two second holes 131 of the other connection block 130. The camera body 110 is connected to the two connection blocks 130 by using four floating connectors 150. It may be understood that one of the two connection blocks 130 is connected to the camera body 110 by using the floating connector 150, and the other one of the two connection blocks 130 may be fixedly connected to or integrally formed with the camera body 110. By using the connection block 130 connected to the floating connector 150, relative positions of the connection block 130 and the camera body 110 in the second direction Y may be adjusted, so as to adjust relative positions of the two connection blocks 130 in the second direction Y.

Optionally, the connection block 130 is further provided with a pre-positioning column 133, and the camera body 110 is further provided with a pre-fastening hole 113. A pre-fastening column is inserted into the pre-fastening hole 113 in the third direction Z, and may pre-fasten the camera body 110 and the connection block 130. After the camera body 110 and the connection block 130 are pre-fastened, the first hole 111 and the second hole 131 are roughly connected. In this case, the connection rod 151 may pass through the second hole 131 to fit with the first hole 111. Then, the relative positions of the connection block 130 and the camera body 110 in the second direction Y are adjusted.

When the camera module 100 and the support frame 300 are produced, a distance between the two first sliding members 231 and a distance between the two second sliding members 233 may have tolerance. The tolerance may easily make it is difficult for the two first sliding members 231 to fit with corresponding second sliding members 233 at the same time. The relative positions of the camera body 110 and the connection block 130 in the second direction Y are adjusted by using the floating connector 150, so that relative positions of the two connection blocks 130 in the second direction Y can be adjusted, and relative positions of the two second sliding members 233 on the two connection blocks 130 can be adjusted to adapt to relative positions of the two first sliding members 231.

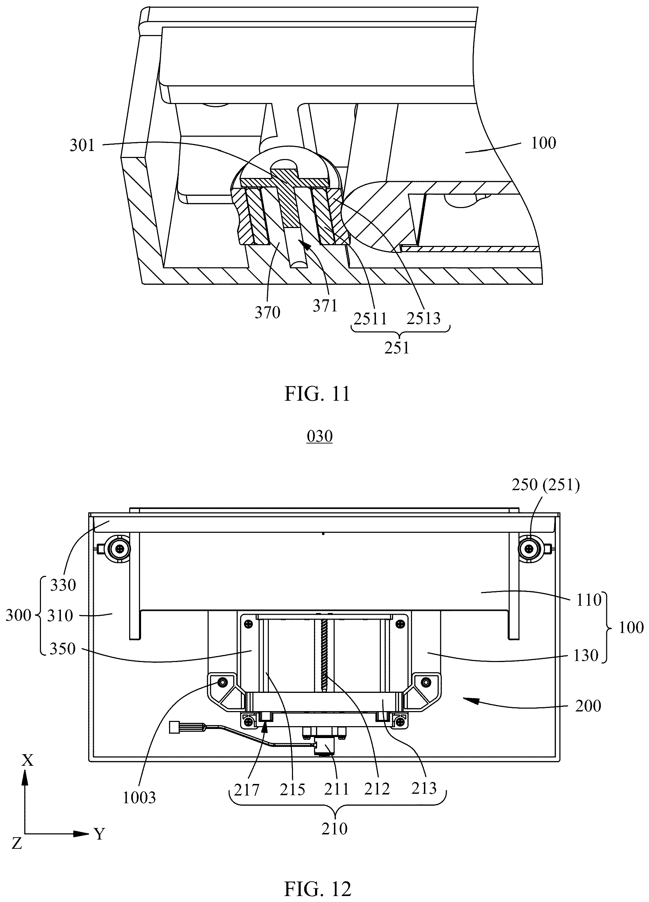

FIG. 11 is a sectional view of the elastic squeezing assembly 250 of the camera assembly 030 according to the first implementation of this application.

Refer to FIG. 4 and FIG. 11. Two squeezing members 251 are disposed on two sides of a camera body 110 in a second direction Y. The squeezing member 251 includes a rotating shaft 2511 and a flexible ring 2513. The rotating shaft 2511 is rotatably connected to a support frame 300. The flexible ring 2513 is sleeved outside the rotating shaft 2511, so that the flexible ring 2513 can rotate with the rotating shaft 2511 relative to the support frame 300. An axis around which the flexible ring 2513 rotates relative to the support frame 300 is roughly parallel to a third direction Z. A periphery of the flexible ring 2513 squeezes the camera body 110 in the second direction Y. A side edge of the camera body 110 is an arc-shaped edge, and the arc-shaped edge presses against the flexible ring 2513. When the camera module 100 moves relative to the support frame 300 in a first direction X, rolling friction is formed between the flexible ring 2513 and the camera module 100. When the squeezing force exerted by the flexible ring 2513 on the camera module 100 is the same, friction force of rolling friction is less than friction force of sliding friction, thereby reducing resistance when the camera module 100 moves in the first direction X. In addition, rolling friction between the flexible ring 2513 and the camera module 100 can also reduce a grinding phenomenon caused by friction.

Optionally, the support frame 300 further includes a mounting screw 301. The support frame 300 has a mounting protrusion column 370 extending in the third direction Z, and the mounting protrusion column 370 has a mounting hole 371 extending in the third direction Z. The rotating shaft 2511 is sleeved outside the mounting protrusion column 370, so that the rotating shaft 2511 can rotate around the mounting protrusion column 370. The mounting screw 301 threadedly fits with the mounting hole 371, and a screw head of the mounting screw 301 restricts the rotating shaft 2511 from being detached from the mounting protrusion column 370.

It may be understood that the rotating shaft 2511 may also be fixedly connected to the support frame 300, and the flexible ring 2513 and the rotating shaft 2511 may rotatably fit with each other, so that the flexible ring 2513 is rotatably connected to the support frame 300.

It may be understood that the two squeezing members 251 may also be disposed on two sides of the two connection blocks 130 in the second direction Y, and the two connection blocks 130 are located between the two squeezing members 251. In this arrangement manner, the two squeezing members 251 also squeeze the camera module 100 in the second direction Y.

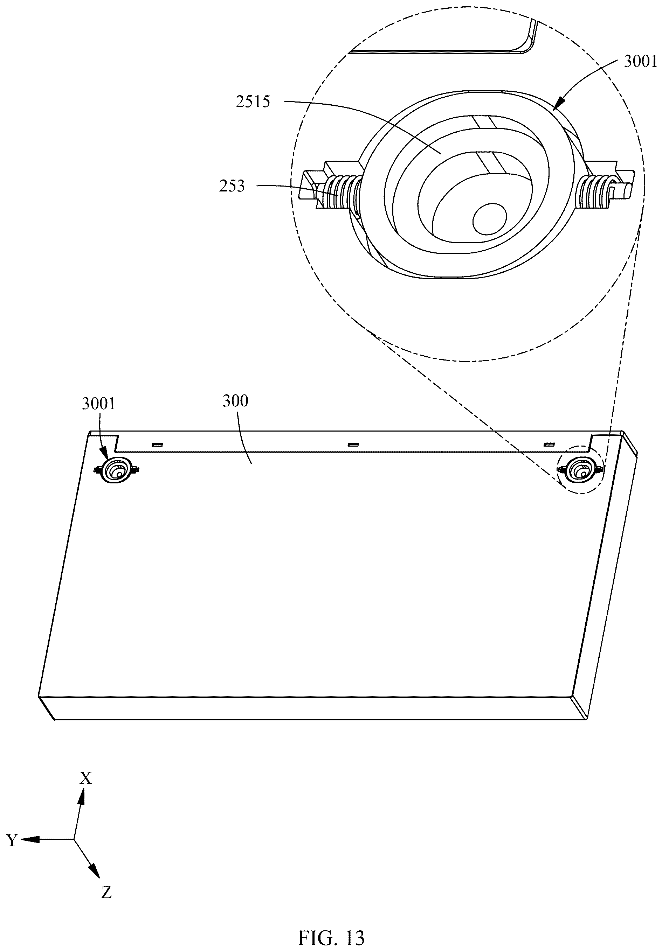

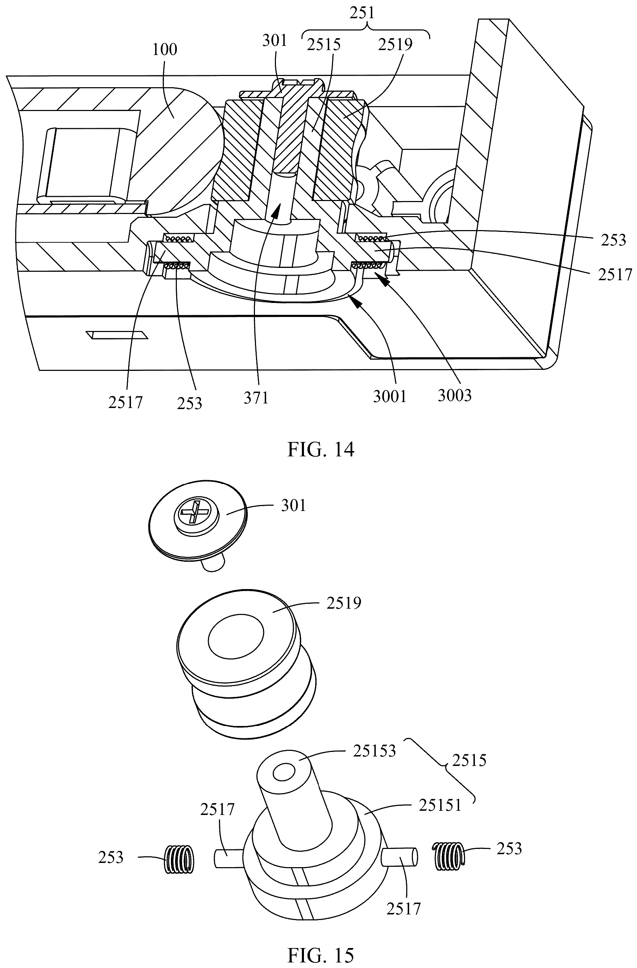

FIG. 12 is a diagram of a structure of a first field of view of a camera assembly 030 according to a third implementation of this application. FIG. 13 is a diagram of a structure of a second field of view of the camera assembly 030 according to the third implementation of this application. FIG. 14 is a sectional view of an elastic squeezing assembly 250 of the camera assembly 030 according to the third implementation of this application. FIG. 15 is an assembly diagram of the elastic squeezing assembly 250 of the camera assembly 030 according to the third implementation of this application.

Refer to FIG. 12 and FIG. 13. The elastic squeezing assembly 250 of the camera assembly 030 includes two squeezing members 251. The two squeezing members 251 clamp a camera module 100 in a second direction Y. The elastic squeezing assembly 250 further includes an elastic member 253. The squeezing member 251 elastically fits with a support frame 300 by using the elastic member 253.

Optionally, each squeezing member 251 elastically fits with the support frame 300 by using the elastic member 253. The elastic member 253 includes a compression spring. One end of the elastic member 253 acts on the support frame 300, and the other end acts on the squeezing member 251, so that the squeezing member 251 can elastically move relative to the support frame 300. Elastic force applied by the support frame 300 to the squeezing member 251 by using the elastic member 253 may further act on the camera module 100, so that the squeezing member 251 elastically approaches the camera module 100.

Refer to FIG. 14 and FIG. 15. Optionally, the squeezing member 251 includes a movable base 2515. The support frame 300 is provided with a movable cavity 3001. The movable base 2515 is disposed in the movable cavity 3001. In the second direction Y, there is a movable gap between an inner wall of the movable cavity 3001 and the movable base 2515, so that the movable base 2515 can move relative to the support frame 300 in the second direction Y. Specifically, mounting channels 3003 are disposed on both sides of the movable cavity 3001 in the second direction Y, and mounting rods 2517 extending into corresponding mounting channels 3003 are disposed on both sides of the movable base 2515 in the second direction Y. An elastic member 253 is sleeved on the mounting rod 2517, and the mounting rod 2517 guides the elastic member 253 to deform in the second direction Y, so as to form elastic force in the second direction Y. One end of the elastic member 253 acts on the movable base 2515, and the other end acts on a wall surface of the mounting channel 3003. The elastic member 253 on a side that is of the movable base 2515 and that is away from the camera module 100 may be set to have greater elastic force, and the elastic member 253 on a side that is of the movable base 2515 and that is close to the camera module 100 may be set to have smaller elastic force. The two elastic members 253 jointly act on the squeezing member 251, and may drive the squeezing member 251 to squeeze the camera module 100. However, if each part of the camera assembly 030 has production tolerance, the camera module 100 abuts against the squeezing member 251 in a process of moving in the first direction X, and the squeezing member 251 is squeezed in the second direction Y to a position away from the other squeezing member 251. In a process in which the camera module 100 restores to an original position in the second direction Y, the elastic member 253 on the side that is of the movable base 2515 and that is close to the camera module 100 may further drive the squeezing member 251 to restore to an original position.

It may be understood that the elastic member 253 may also be disposed only on one side of the squeezing member 251, one end of the elastic member 253 is fastened to the movable base 2515, and the other end is fastened to the support frame 300. The elastic member 253 may drive the squeezing member 251 to move back and forth in the second direction Y.

It may be understood that the elastic members 253 may also be disposed on two sides of the squeezing member 251 in the first direction X, so that the squeezing member 251 can also move relative to the support frame 300 in the first direction X. When the squeezing member 251 is stuck when rolling on the outer side of the camera module 100, floating of the squeezing member 251 in the first direction X may also reduce sliding friction of the squeezing member 251 on the camera module 100.

Optionally, the support frame 300 further includes a mounting screw 301. The movable base 2515 has a mounting protrusion column 370 extending in a third direction Z, and the mounting protrusion column 370 has a mounting hole 371 extending in the third direction Z. The squeezing member 251 includes a rigid ring 2519. The rigid ring 2519 is sleeved outside the mounting protrusion column 370, so that the rigid ring 2519 can rotate around the mounting protrusion column 370. The mounting screw 301 threadedly fits with the mounting hole 371, and a screw head of the mounting screw 301 restricts the rigid ring 2519 from being detached from the mounting protrusion column 370.

Optionally, the movable cavity 3001 is a stepped hole that runs through in the third direction Z. In the third direction Z, the movable base 2515 includes a first segment 25151 and a second segment 25153. On a cross section perpendicular to the third direction Z, a cross-sectional area of the first segment 25151 is greater than a cross-sectional area of the third segment. When the second segment 25153 passes through one end that is away from the camera module 100 through the stepped hole and moves in the third direction Z to an end at which the camera module 100 is disposed, the first segment 25151 acts on a bottom wall of the stepped hole-shaped movable cavity 3001, to restrict the movable base 2515 from continuing to move in the third direction Z, so as to prevent the entire movable base 2515 from passing through the movable cavity 3001. An opening is formed on a side that is of the mounting channel 3003 and that is away from the camera module 100. As the movable base 2515 enters the movable cavity 3001 in the third direction Z, the mounting rod 2517 disposed in the first segment 25151 also enters the mounting channel 3003 through the opening. Refer to FIG. 3. When the support frame 300 is disposed on a display panel 011, the display panel 011 closes the opening, so as to restrict the movable base 2515 from moving away from the movable cavity 3001 in the third direction Z.

Refer to FIG. 15 and FIG. 11. It may be understood that the rigid ring 2519 may also be replaced with a component that fits with the rotating shaft 2511 and the flexible ring 2513. The rotating shaft 2511 is rotatably connected to the mounting protrusion column 370. The flexible ring 2513 is sleeved outside the rotating shaft 2511, and the rotating shaft 2511 enables the flexible ring 2513 to be rotatably connected to the support frame 300. The flexible ring 2513 squeezes the camera module 100. It may be understood that the rotating shaft 2511 may also be fixedly connected to the support frame 300, and the flexible ring 2513 and the rotating shaft 2511 may rotatably fit with each other, so that the flexible ring 2513 is rotatably connected to the support frame 300.

It may be understood that the components of the camera module 100 in the first implementation, the components of the camera assembly 030 in the second implementation, and the components of the camera assembly 030 in the third implementation of this application may be combined with each other. For example, in the first implementation, the camera module 100 that is fixedly connected to or integrally formed with the camera body 110 by using the two connection blocks 130 may also be used in the third implementation.

In the terminal device 001 provided in this application, the support frame 300 of the camera assembly 030 restricts relative positions of the driving structure 200 and the camera module 100, and restricts a movement path of the camera module 100 to the first direction X by using the guide assembly 230, so that the driving structure 200 can drive the camera module 100 to move in the first direction X when operating. The two squeezing members 251 of the elastic squeezing assembly 250 squeeze the camera module 100 in the second direction Y, and the camera module 100 moves under squeezing force, so that the camera module 100 can be restricted from deviating from the first direction X when moving in the first direction X. The two squeezing members 251 may also reduce a tilt amount of the camera module 100 tilting in the first direction X.

The foregoing descriptions are merely specific implementations of this application, but are not intended to limit the protection scope of this application. Any variation or replacement within a technical scope disclosed in this application shall fall within the protection scope of this application.

## Claims

1. A camera assembly, comprising a support frame, a camera module, and a driving structure, wherein the driving structure and the camera module are disposed on the support frame, the driving structure is configured to drive the camera module to move in a first direction, and the driving structure comprises:
a driving assembly, connected to the support frame and having an output end capable of moving in the first direction, wherein the output end is connected to the camera module;
a guide assembly, connected to the support frame and the camera module, to guide the camera module to move relative to the support frame in the first direction; and
an elastic squeezing assembly, comprising two squeezing members, wherein the squeezing members are connected to the support frame, the two squeezing members are disposed on two sides of the camera module and spaced apart from each other in a second direction, the squeezing members squeeze the camera module in the second direction, and the second direction is perpendicular to the first direction.

2. The camera assembly according to claim 1, wherein the squeezing member is in rolling contact with the camera module.

3. The camera assembly according to claim 2, wherein the squeezing member comprises a rotating shaft and a flexible ring;
the flexible ring is sleeved on the rotating shaft;
the rotating shaft is connected to the support frame, so that the flexible ring is rotatably connected to the support frame; and
a periphery of the flexible ring is in rolling contact with the camera module.

4. The camera assembly according to claim 1, wherein the elastic squeezing assembly further comprises an elastic member; and
one end of the elastic member acts on the support frame, and the other end acts on the squeezing member, so that the squeezing member has a tendency to elastically approach the camera module.

5. The camera assembly according to claim 1, wherein the guide assembly comprises a first sliding member and a second sliding member;
the first sliding member is disposed on the support frame, and the second sliding member is disposed on the camera module; and
the first sliding member and the second sliding member slidably fit with each other in the first direction.

6. The camera assembly according to claim 5, wherein the two first sliding members are spaced apart from each other in the second direction, and the two second sliding members are spaced apart from each other in the second direction.

7. The camera assembly according to claim 6, wherein the camera module comprises a camera body and two connection blocks;
the two connection blocks are spaced apart from each other in the second direction;
one end of each connection block is connected to the camera body, and the other end is connected to the output end; and
each second sliding member is disposed on a corresponding connection block.

8. The camera assembly according to claim 7, wherein the camera module further comprises a floating connector;
the floating connector has a first connection end and a second connection end;
the first connection end is connected to the camera body, and the second connection end is connected to the connection block; and
the first connection end elastically fits with the camera body, or the second connection end elastically fits with the connection block, so that the camera body can adjustably fit with the connection block in the second direction.

9. The camera assembly according to claim 8, wherein the floating connector comprises a connection rod and an elastic washer;
the camera body is provided with a first hole, and the connection block is provided with a second hole;
the connection rod passes through the first hole and the second hole, and an adjustment gap is formed between the connection rod and an inner wall of the first hole or an inner wall of the second hole; and
the elastic washer is sleeved on the connection rod, and is located in the adjustment gap, to form the first connection end or the second connection end.

10. The camera assembly according to claim 5, wherein one of the first sliding member and the second sliding member is a sliding groove extending in the first direction, and the other is a sliding bar extending in the first direction.

11. The camera assembly according to claim 1, wherein the driving assembly comprises a driving member and a connection base, and the connection base extends in the second direction;
the driving member is fixedly disposed on the support frame, and the connection base is connected to the driving member to form the output end; and
the camera module is connected to two ends of the connection base in the second direction.

12. The camera assembly according to claim 11, wherein the driving assembly further comprises a first guide member and a second guide member;
the first guide member is disposed on the support frame, and the second guide member is disposed on the connection base; and
the first guide member and the second guide member slidably fit with each other in the first direction.

13. The camera assembly according to claim 11, wherein the driving member comprises a motor and a lead screw;
the lead screw extends in the first direction, and the motor is connected to the lead screw to drive the lead screw to rotate; and
the lead screw threadedly fits with the connection base.

14. A terminal device, comprising a terminal body and the camera assembly according to any one of claims 1 to 13, wherein
the camera assembly is disposed on the terminal body.

15. The terminal device according to claim 14, wherein the terminal body comprises a display panel;
the display panel has a display surface and a mounting surface that are opposite to each other;
the display surface is used to display image information; and
the support frame of the camera assembly is disposed on the mounting surface.
